# EUROPEAN PATENT APPLICATION

(11) **EP 2 811 603 A1**
(43) Date of publication of application: **10.12.2014**
(21) Application number: 13743357.9
(22) Date of filing: 01.02.2013
(51) Int. Cl.: H02G 11/02, B60L 11/18, B65H 75/28, B65H 75/38

(54) **CABLE HOUSING DEVICE**

(30) Priority: 03.02.2012 JP 2012022025
(71) Applicant: Chuo Hatsujo Kabushiki Kaisha, Nagoya-shi, Aichi 458-8505 (JP)
(72) Inventor: IWAMI, Kenji, Nagoya-shi, Aichi 458-8505 (JP); MIZUNO, Eiji, Nagoya-shi, Aichi 458-8505 (JP)
(74) Representative: Kramer - Barske - Schmidtchen
(86) International application number: PCT/JP2013/052374
(87) International publication number: WO 2013/115376

(57) **Abstract**

A cable housing device according to the present invention is provided with a rotating drum having a winding portion around which a cable is wound, and a guide groove having a groove into which a wind start portion of the cable is inserted and extending along a circumferential direction of the winding portion. A width of at least one portion of the groove is smaller than an external diameter of the cable.

## Description

### CROSS REFERENCE TO RELATED APPLICATION

This international application claims the benefit of Japanese Patent Application No. 2012-22025 filed on February 3, 2012 in the Japan Patent Office, and the entire disclosure of Japanese Patent Application No. 2012-22025 is incorporated herein by reference.

### TECHNICAL FIELD

The present invention relates to a cable housing device comprising a rotating drum provided for winding a cable.

### BACKGROUND ART

Winding a cable with a rotating drum requires securing a wind start portion of the cable to the rotating drum.

For example, in the invention disclosed in Patent Document 1, a cable is secured by interposing the cable between a concave portion, formed by one pair of protrusions disposed away from each other, and a convex portion formed by one protrusion.

### PRIOR ART DOCUMENT

### PATENT DOCUMENT

Patent Document 1: Specification of Japanese Patent No. 3618172

### SUMMARY OF THE INVENTION

### PROBLEMS TO BE SOLVED BY THE INVENTION

However, the invention disclosed in Patent Document 1 is not a suitable structure for securing a cable having a relatively large cable diameter and a relatively large allowable minimum curvature radius.

That is, the invention disclosed in Patent Document 1 is a technique for securing a cable, having a relatively small diameter and large flexibility, such as an electric wire for lighting, and, therefore, is an inappropriate structure for securing a thick cable such as a charging cable for electric vehicle.

One aspect of the present invention provides a cable housing device that is suitable for winding a thick cable, such as a charging cable.

### MEANS FOR SOLVING THE PROBLEMS

A cable housing device according to the present invention includes a rotating drum having a winding portion around which a cable is wound, and a guide groove having a groove into which a wind start portion of the cable is inserted and extending along a circumferential direction of the winding portion. A width of at least one portion of the groove is smaller than the external diameter of the cable.

This enables the cable to be engaged with the guide groove, extending along the circumferential direction of the winding portion, and to be secured in the engaged state in the present invention. Since a cable can be secured without being sharply curved, a cable housing device that is suitable for winding a thick cable can be achieved.

### BRIEF DESCRIPTION OF THE DRAWINGS

FIG. 1 is a perspective view of a holder 10 and a reel 20 of a charging cable housing device according to a first embodiment of the present invention.
FIG. 2 is a rear side perspective view of the reel 20 according to the first embodiment of the present invention.
FIG. 3 is a front side perspective view of the reel 20 according to the first embodiment of the present invention.
FIG. 4 is a side view of a rotating drum 23 according to the first embodiment of the present invention.
FIGS. 5A-5B are partial views in which FIG. 5A shows a portion of a perspective view of the rotating drum 23 according to the first embodiment of the present invention, and in which FIG. 5B shows a portion of a front view of the rotating drum 23 according to the first embodiment of the present invention.
FIG. 6 is a perspective view of a rotating drum 23 according to the first embodiment of the present invention.
FIG. 7 is a perspective view of a rotating drum 23 according to the first embodiment of the present invention in which only the circumference of a guide groove 29A is shown in a cross section.
FIG. 8 is a comparison view for explaining the effect of the rotating drum 23 according to the first embodiment of the present invention.
FIG. 9 is a comparison view for explaining the effect of the rotating drum 23 according to the first embodiment of the present invention.
FIG. 10 is a view for explaining the effect of the rotating drum 23 according to the first embodiment of the present invention.
FIG. 11 is a front view of a rotating drum 23 according to a second embodiment of the present invention.
FIG. 12 is a perspective view of the rotating drum 23 according to the second embodiment of the present invention in which only the circumference of a guide groove 29A is shown in a cross section.
FIG. 13 is a side view of the rotating drum 23 according to the second embodiment of the present invention.

### EXPLANATION OF REFERENCE NUMERALS

1···charging cable housing device, 3···charging cable, 3A···charging control box, 3B···terminal side cable, 3C···wound side cable, 3D···terminal connector, 3E···vehicle side connector, 3F···wind start portion, 10···holder, 10A···supporting portions, 10B···hook portions, 10C···arm portions, 10D···projecting portions, 11···holder side connector, 20···reel, 21···back plate, 21A···concave portions, 21B···engaging portions, 21C···engaging projections, 21E···grip portion, 21D···release button, 21G···stopper hook portion, 23···rotating drum, 25···brum plate, 27···winding rim, 27A···large diameter portion, 27B···small diameter portion, 27C···guide surface, 29···flange portion, 29A···guide groove, 29B···start end portion, 29C···finish end portion, 29D···slit portion, 29E···inclined surface, 31···securing portion, 32···reel side connector, 33···cable side connector

### MODE FOR CARRYING OUT THE INVENTION

"Embodiments of the invention" to be described below show some examples of embodiments. That is to say that the matters that define the invention disclosed in the claims are not limited to-specific configurations or structures presented in the following embodiments.

In the present embodiments, the present invention is applied to a charging cable housing device for electric vehicle, such as plug-in hybrid automobiles. The following explains the embodiments according to the present invention with reference to the drawings.

### (First Embodiment)

### 1. Structure of Charging Cable Housing Device

### 1.1. General Description of Charging Cable Housing Device

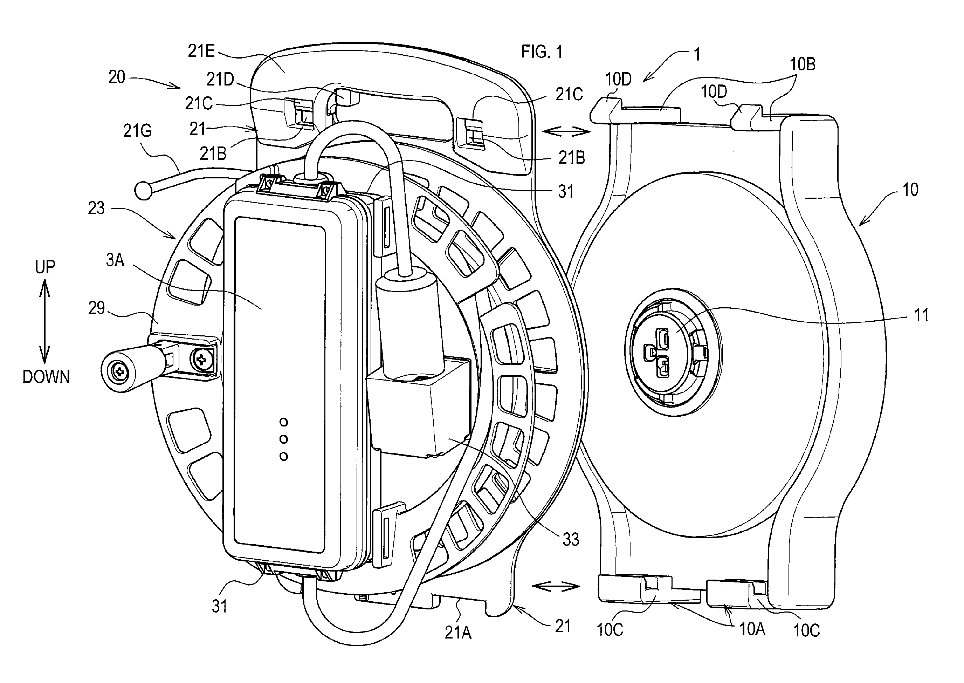

A charging cable housing device 1 according to the present embodiment includes, as shown in Fig. 1, a holder 10 and a reel 20. The reel 20 is attachable and detachable to and from the holder 10. In order to charge an electric vehicle, the reel 20 is generally attached to the holder 10.

### 1.2. Structure of Holder

The holder 10 is provided with a holder side connector 11 which is to be electrically connected to a charging power source (not shown) side. The holder side connector 11 is rotatably disposed approximately in the center of the holder 10.

The holder side connector 11 is electrically connected to a power source side cable (not shown) via sliding contacts, such as a slip ring (not shown) disposed inside of the holder 10. Thus, the holder side connector 11 can be rotated with respect to the holder 10 while conduction with the power source side cable is maintained.

The power source side cable is provided so as to electrically connect the charging power source and the holder side connector 11. The power source side cable is connected to a brush (not shown) disposed on a fixed side of the slip ring, while an electrode ring, disposed on the rotational side of the slip ring, is connected to the holder side connector 11.

In the upper end side and the lower end side of the holder 10, reel securing portions 10A and 10B are disposed so as to secure the reel 20 to the holder 10. The reel securing portions 10A in the lower end side are supporting portions that support the lower end side of the reel 20.

On the other hand, the reel securing portions 10B in the upper end side are hook portions that engage with the upper end side of the reel 20 so as to hold the reel 20. In the following, the reel securing portions 10A in the lower end side will be referred to as supporting portions 10A, and the reel securing portions 10B in the upper end side will be referred to as hook portions 10B.

The supporting portions 10A protrude from the holder 10 toward the reel 20, and are constituted with arm portions 10C having concave portions disposed in the protruding side. The hook portions 10B protrude from the holder 10 toward the reel 20, and are hook-like members having projecting portions 10D disposed in the protruding side.

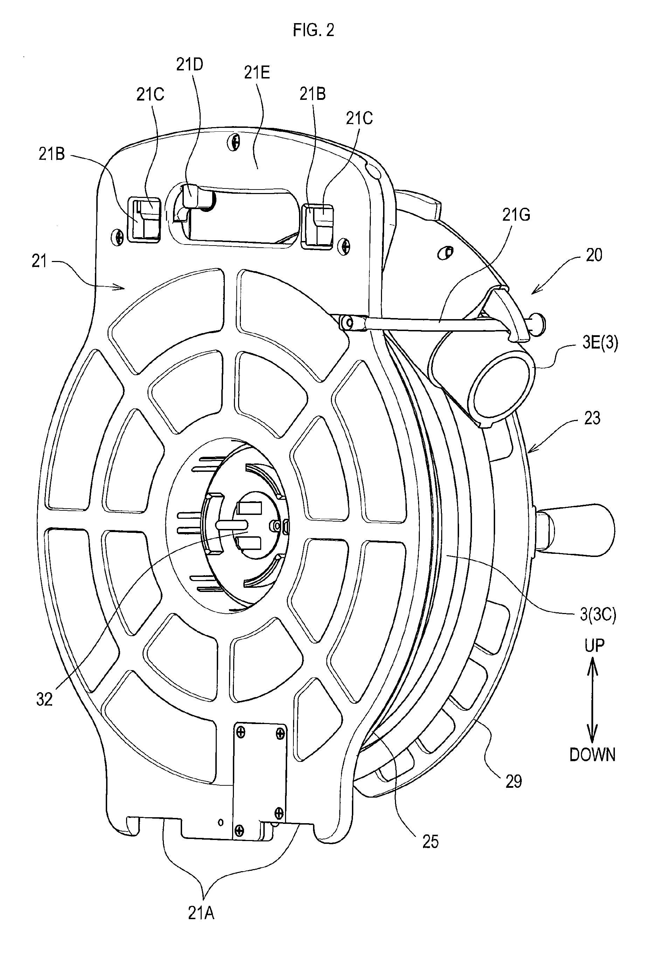

On the other hand, as shown in Fig. 2, a back plate 21 of the reel 20 is provided with concave portions 21A, to be engaged with the concave portions of the supporting portion 10A in a fitted manner, and hole-like engaging portions 21B, in which the hook portions 10B are to be inserted.

In each of the engaging portions 21B, an engaging projection 21C is provided so as to be engaged with the projecting portion 10D. These engaging projections 21C are pressed by unshown springs to some positions, in which the engaging projections 21C can be engaged with the projection portions 10D.

In order to attach the reel 20 to the holder 10, the concave portions 21A of the reel 20 are inserted into the supporting portions 10A, and while the inserted state is maintained, the reel 20 is rotated about the supporting portions 10A toward the holder 10. Consequently, the hook portions 10B are inserted into the engaging portions 21B, and simultaneously the engaging projections 21C, provided in the reel 20 side, and the projecting portions 10D, provided in the holder 10 side, are engaged. As a result, the reel 20 is secured to the holder 10.

In order to remove the reel 20 from the holder 10, a release button 21D, disposed in a grip portion 21E of the reel 20 (back plate 21), is operated so as to disengage the engaging projections 21C and the projecting portions 10D, and while the disengaged state is maintained, the reel 20 is rotated about the supporting portions 10A away from the holder 10.

### 1.3. Structure of Reel

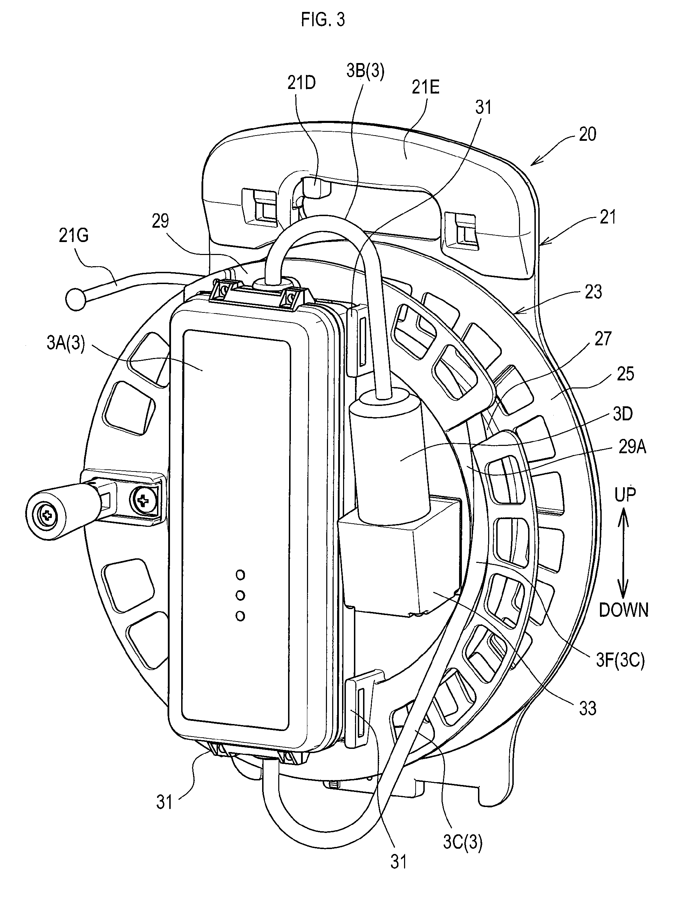

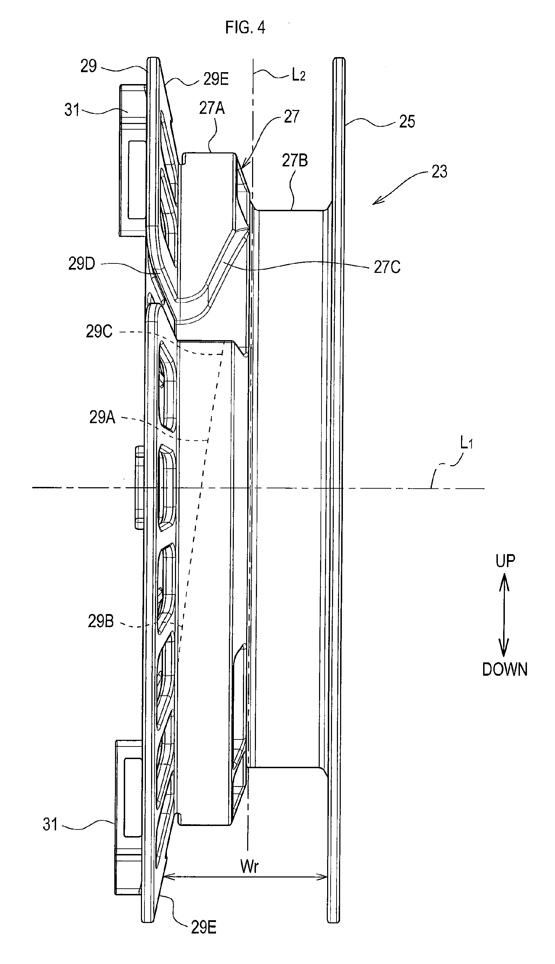

The reel 20 includes, as shown in Fig. 3, a rotating drum 23 that winds a charging cable 3, and the back plate 21 that rotatably supports the rotating drum 23. The rotating drum 23 includes, as shown in Fig. 4, a disc-like drum plate 25, a winding rim 27, formed in an annular manner, and a flange portion 29, formed in a brim-like manner. The detail of the rotating drum 23 will be explained later.

As shown in Fig. 3, the flange portion 29 is provided with securing portions 31 with which a charging control box 3A is secured in a detachable manner. The charging control box 3A includes a control circuit, such as a CCID (Charge Circuit Interrupt Device) that controls charging, and is disposed in an electric circuit that connects the charging power source and electric vehicle.

In many cases, the charging control box 3A is supplied from a vehicle manufacturer or the like as one part of the charging cable 3. In the following, the portion of the charging cable 3, located from the charging control box 3A toward the charging power source, will be referred to as a terminal side cable 3B, and the portion of the charging cable 3, located from the charging control box 3A toward the electric vehicle, will be referred to as a wound side cable 3C. That means, in the present embodiment, the cable wound around the winding rim 27, serving as the winding portion, is the wound side cable 3C of the charging cable 3.

To the end portion of the terminal side cable 3B, a terminal connector 3D is provided so as to be connected to the power source side. On the other hand, to the end portion of the wound side cable 3C, a vehicle side connector 3E (see Fig. 2) is provided so as to be connected to the electric vehicle. That is, the charging cable 3 according to the present embodiment includes the charging control box 3A, the terminal side cable 3B, the wound side cable 3C, the terminal connector 3D, and the vehicle side connector 3E.

In the back plate 21, a stopper hook portion 21G is provided so as to stop the end portion side of the wound side cable 3 C in an engaged manner. Therefore, while the end portion side of the wound side cable 3C is engaged with the stopper hook portion 21G and stopped, the wound side cable 3C, wound around the winding rim (winding portion) 27, is not remarkably loosened even when the rotating drum 23 is rotated.

In the securing portion 31 side of the rotating drum 23, a cable side connector 33 is provided, to which the terminal connector 3D can be attached. On the other hand, in the holder 10 side of the rotating drum 23, as shown in Fig. 2, a reel side connector 32 is provided, which can be fitted to the holder side connector 11 and be electrically connected to the cable side connector 33.

Therefore, while the terminal connector 3D is attached to the cable side connector 33, and when the holder side connector 11 and the reel side connector 32 are fitted to each other, the charging cable 3 and the power source side cable become conductive.

When the wound side cable 3C, wound around the rotating drum 23, is pulled out, the holder side connector 11 and the reel side connector 32 are rotated in conjunction with the rotation of the rotating drum 23. Nevertheless, due to the above described slip ring, the conductive state between the charging cable 3 and the power source side cable is maintained.

### 1.4 Detailed Structure of Rotating Drum

As shown in Fig. 4, the rotating drum 23 is configured in a bobbin-like manner when seen from a direction perpendicular to the axial direction L1. Specifically, on one side of the winding rim 27, around which the wound side cable 3C is to be wound, in the axial direction L1, the flange portion 29 is disposed while on the other side in the axial direction L1, the drum plate 25 is disposed. The outer edge portions of the flange portion 29 and the drum plate 25 further protrude toward outside in the radial direction than the winding rim 27.

In the outer peripheral of the winding rim 27, a large diameter portion 27A and a small diameter portion 27B are continuously disposed in an aligned manner in the axial direction. The diameter of the small diameter portion 27B is smaller than the diameter of the large diameter portion 27A. The small diameter portion 27B is formed with resin in an integrated manner together with the drum plate 25.

On the other hand, the large diameter portion 27A is formed with resin in an integrated manner together with the flange portion 29. The rotating drum 23 is constructed by the small diameter portion 27B being fitted into the large diameter portion 27A so as to be combined and secured to each other.

The wound side cable 3C to be wound around the winding rim 27 is, as shown in Fig. 3, drawn from the charging control box 3A, secured to the exterior of the winding rim 27, onto the winding rim 27. That is, a wind start portion 3F of the wound side cable 3C penetrates the flange portion 29 from the outer side of the winding rim 27 (in other words, traverses the flange portion 29) and reaches the inner side of the winding rim 27.

The "outer side of the winding rim 27" means the opposite side of the winding rim 27 in the axis direction L1 across the flange portion 29. The "inner side of the winding rim 27" indicates the portion between the flange portion 29 and the drum plate 25, which means the portion that the wound side cable 3C is to be wound around.

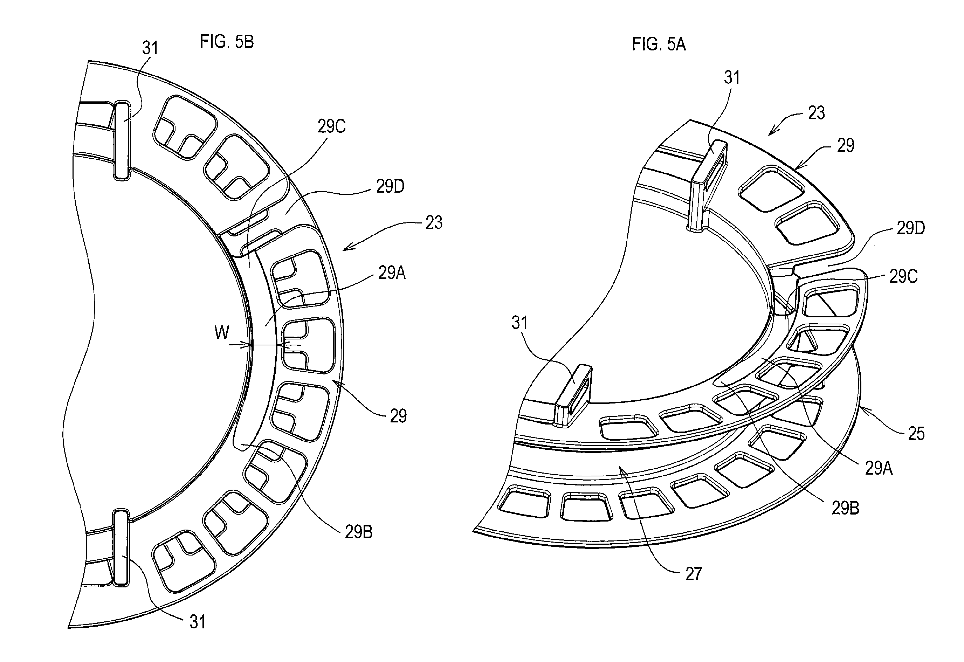

The flange portion 29 is provided, as shown in Fig. 5A and Fig. 5B, with a guide groove 29A, which guides the wind start portion 3F from the outer side of the winding rim 27 to the inner side thereof. The guide groove 29A has a groove into which the wind start portion 3F is to be inserted. The guide groove 29A extends along the circumferential direction of the winding rim 27, and is configured such that at least one portion of the groove width W is determined to be smaller than the external diameter of the wound side cable 3C.

The guide groove 29A according to the present embodiment is open toward the outer side of the winding rim 27, and extends from a start end portion 29B to a finish end portion 29C with a uniform groove width W. In the present embodiment, the groove width W is determined to be 0.93 times or more and 0.98 times or less of the external diameter of the wound side cable 3C.

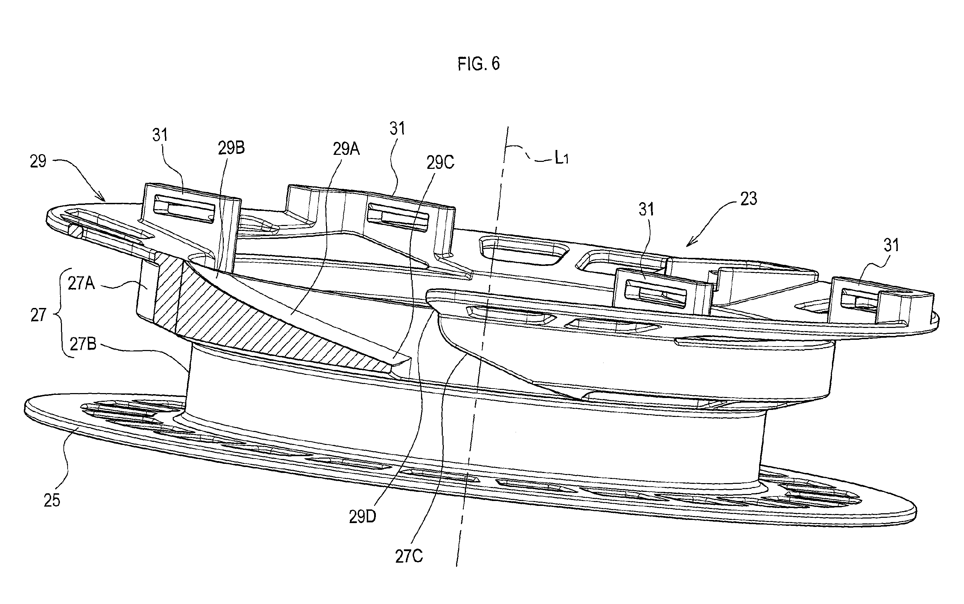

The guide groove 29A extends, as shown in Fig. 4, along the circumferential direction such that the start end portion 29B and the finish end portion 29C are disposed so as to be misaligned in a direction parallel to the axial direction L1. In other words, the guide groove 29A is a spiral groove formed in a spiral manner in which the portion thereof from the start end portion 29B to the finish end portion 29C is inclined with respect to the axis L1. As shown in Fig. 6, the guide groove 29A communicates with the small diameter portion 27B from the outer side of the winding rim 27.

In a region of the large diameter portion 27A from the finish end portion 29C to the small diameter portion 27B, a guide surface 27C is provided so as to guide the wind start portion 3F from the finish end portion 29C to the small diameter portion 27B. The guide surface 27C spirally extends from a slit portion 29D to the small diameter portion 27B so that the guide groove 29A is extended.

As shown in Fig. 5A and Fig. 5B, the slit portion 29D is some region of the flange 29 that corresponds to the position of the finish end portion 29C having a region, extending from the outer edge of the flange 29 to the finish end portion 29C, being removed. The slit portion 29D is used when the wind start portion 3F is attached to the guide groove 29A from the outer edge side of the flange portion 29.

In the winding rim 27 side of the flange portion 29, as shown in Fig. 4, an inclined surface 29E is provided. The inclined surface 29E is inclined with respect to a direction L2 perpendicular to the axial direction L1. In other words, the inclined surface 29E is inclined toward outer side in the radial direction so as to be gradually separated away from the drum plate 25, disposed on the other side in the axial direction L1.

### 2. Feature of Charging Cable Housing Device According to Present Embodiment

In the present embodiment, as shown in Fig. 3, the wind start portion 3F of the wound side cable 3C is secured while being fitted into the guide groove 29A, extending along the circumferential direction of the winding rim 27. This enables the wind start portion 3F of wound side cable 3C to be secured without being sharply curved. As a result, a charging cable housing device 1 that is suitable for winding a thick cable can be achieved.

Moreover, in the present embodiment, as shown in Fig. 5A, the guide groove 29A extends along the circumferential direction such that the start end portion 29B, located on one end side in the extending direction, and the finish end portion 29C, located on the other end side, are disposed in a misaligned manner in a direction parallel to the axial direction L1.

This, in the present embodiment, enables the wound side cable 3C to be guided to the winding rim 27 without being sharply curved. Therefore, a cable housing device that is suitable for winding a thick cable can be achieved.

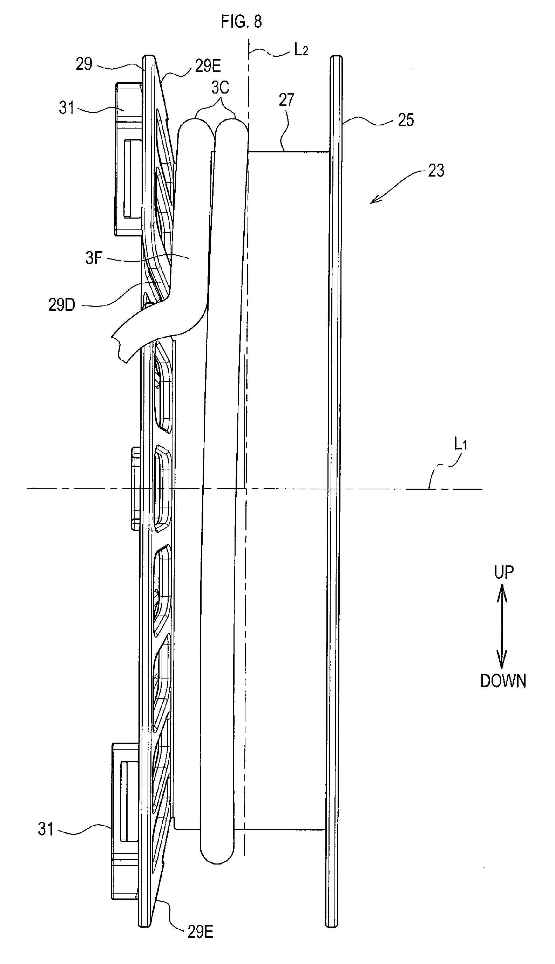

That is to say, for example, in a case wherein the guide groove 29A is not provided, in order to wind the wound side cable 3C, guided from one side in the axial direction L1 to the winding rim 27, around the winding rim 27, the wind start portion 3F of the wound side cable 3C needs to be sharply curved in the direction L2 perpendicular to the axial direction, as shown in Fig. 8.

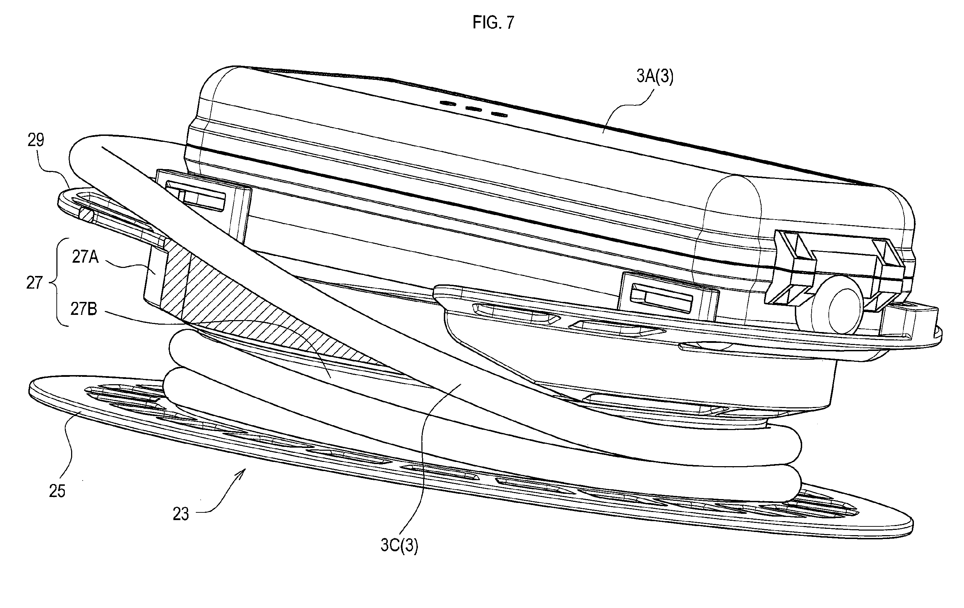

On the other hand, in the present embodiment, the wound side cable 3C, fitted into the guide groove 29A, is, as shown in Fig. 7, gradually curved by the guide groove 29A in the direction L2 perpendicular to the axial direction. This enables the wound side cable 3C to be guided to the winding rim 27 without being sharply curved. Therefore, a charging cable housing device 1 that is suitable for winding up a thick cable can be achieved.

Moreover, in the present embodiment, the winding rim 27 is provided with the large diameter portion 27A and the small diameter portion 27B disposed in an aligned manner in the axial direction, and the guide groove 29A communicates with the small diameter portion 27B.

This, in the present embodiment, enables the wound side cable 3C being guided to the small diameter portion 27B without being sharply curved. Therefore, the wound side cable 3C can be wound from the smaller diameter portion 27B side, and subsequently wound around the large diameter portion 27A.

That is, if the wound side cable 3C should be tightly wound around a flat winding reel 27 without the large diameter portion 27A and the small diameter portion 27B, as shown in Fig. 8, winding the wind start portion 3F of the wound side cable 3C needs to be started from an end portion of the winding rim 27. In other words, the wind start portion 3F has to be placed beside the flange portion 29.

In order to place the wind start portion 3F against the flange portion 29, the wound side cable 3C, introduced from the outer side of the winding rim 27 to the inner side of the winding rim 27, needs to be sharply curved in the direction L2 perpendicular to the axial direction L1.

Sharply curving the wound side cable 3C in the direction L2 perpendicular to the axial direction L1 requires curving the wound side cable 3C in a radius of curvature, which is smaller than the allowable minimum radius of curvature of the wound side cable 3C. This creates difficulty in disposing the wind start portion 3F beside the end portion of the winding rim 27.

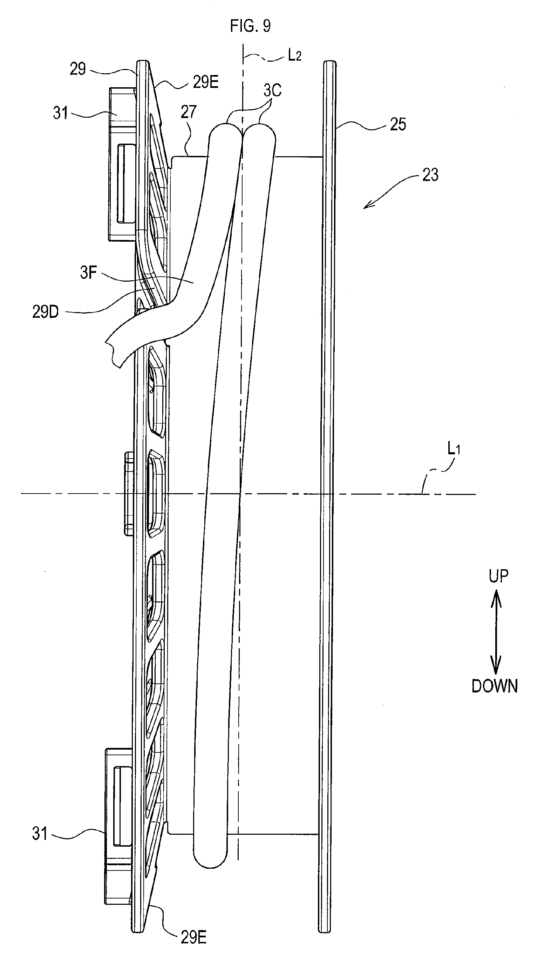

If the wind start portion 3F is disposed in the end portion of the winding rim 27, that is, away from the flange portion 29, a gap is created between the flange portion 29 and the wind start portion 3F as shown in Fig. 9. Thus, the wound side cable 3C in the second layer of the winding is fitted in the gap, which disables tight winding of the wound side cable 3C.

Even if the gap, created between the flange portion 29 and the wind start portion 3F, is too small for the wound side cable 3C to be fitted in, the existence of a gap shortens the length of the wound side cable 3C that can be wound in the first layer. Therefore, winding of the wound side cable 3C moves on to a second layer too promptly.

On the other hand, in the present embodiment, the large diameter portion 27A is disposed in the region of the above described gap as shown in Fig. 7. As a result, substantially no gap is created. Moreover, the wound side cable 3C is introduced to the small diameter portion 27B without being sharply curved, which hardly creates a gap between a step portion, located between the large diameter portion 27A and the small diameter portion 27B, and the wound side cable 3C. Therefore, the wound side cable 3C can be tightly wound, which can make the length of the wound side cable 3C to be wound in the first layer longer.

If the dimension of the step between the large diameter portion 27A and the small diameter portion 27B corresponds to the diameter of the wound side cable 3C, the winding rim 27 becomes flat once the wound side cable 3C is wound around. This can contribute to a preferable winding of second and further layers.

Moreover, in the present embodiment, the guide groove 29A penetrates the flange portion 29 from the outer side of the winding rim 27, and extends to the inner side of the winding rim 27.

This, in the present embodiment, enables the wound side cable 3C to be guided from the outer side of the winding rim 27 to the inner side of the winding rim 27 in a unforced manner without being sharply curved.

Moreover, in the present embodiment, as shown in Fig. 4, the winding rim 27 side of the flange portion 29 is provided with the inclined surface 29E, which is inclined toward the outer side in the radial direction so as to be gradually separated away from the drum plate 25.

Since, in the present embodiment, the width dimension Wr of the winding rim 27 substantially widens toward the outer side in the radial direction, the wound side cable 3C can even be wound with an elongate shape.

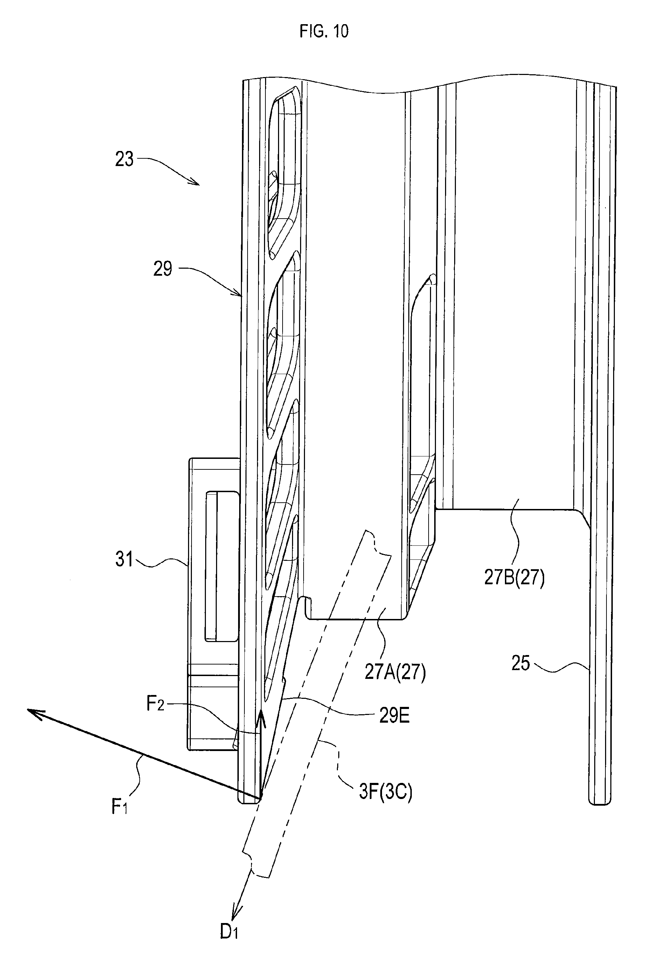

Furthermore, when the wound side cable 3C is to be pulled out, in a case wherein a direction D1 to pull out the cable is not directed perpendicularly to the axial direction L1, the wound side cable 3C to be pulled out comes in sliding contact with the inclined surface 29E, and, as shown in Fig. 10, a part of the force to pull out the wound side cable 3C can be used as force F2 for rotating the rotating drum 23.

Therefore, even in a case wherein the direction to pull out the wound side cable 3C is not directed perpendicularly to the axial direction L1, the wound side cable 3C can be easily pulled out. The force F1 is generated at the sliding contact portion between the wound side cable 3C and the inclined surface 29E, and directed perpendicularly to the sliding contact portion. The force F2 is a component of the force F1 for rotating the rotating drum 23.

In the present embodiment, the above described sliding contact portion, that is, the tip of the inclined surface 29E is configured in a curved surface so that the wound side cable 3C can be smoothly slid against the inclined surface 29E.

In a case wherein the flange portion 29 is not provided with the inclined surface 29E, when the wound side cable 3C is pulled out in a direction non-perpendicular to the axial direction L1, the force F1 is directed in parallel to the axial direction L1, or directed outwardly in the radial direction. In this case, no force is generated to rotate the rotating drum 23, which makes the wound side cable 3C difficult to be easily pulled out.

### (Second Embodiment)

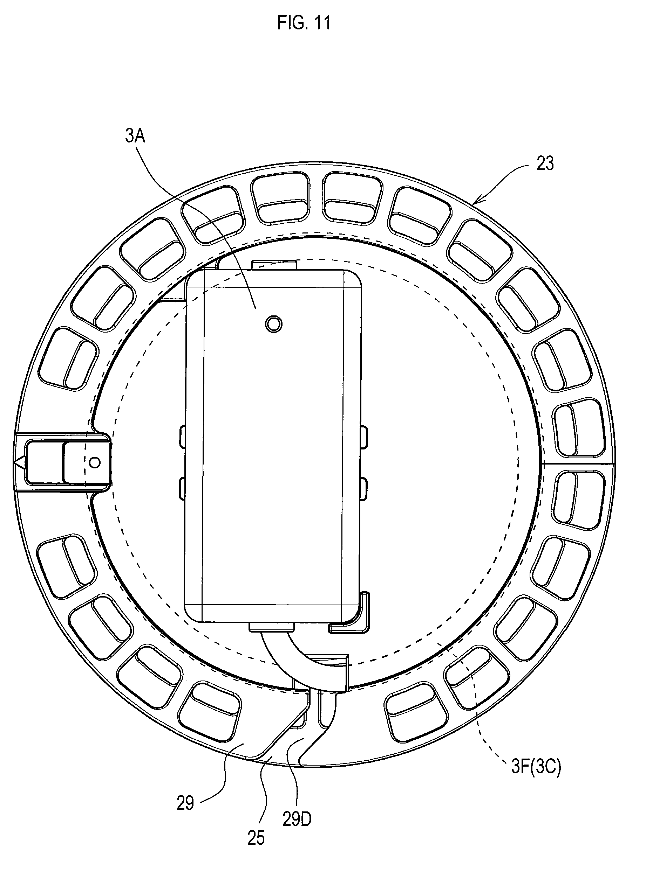

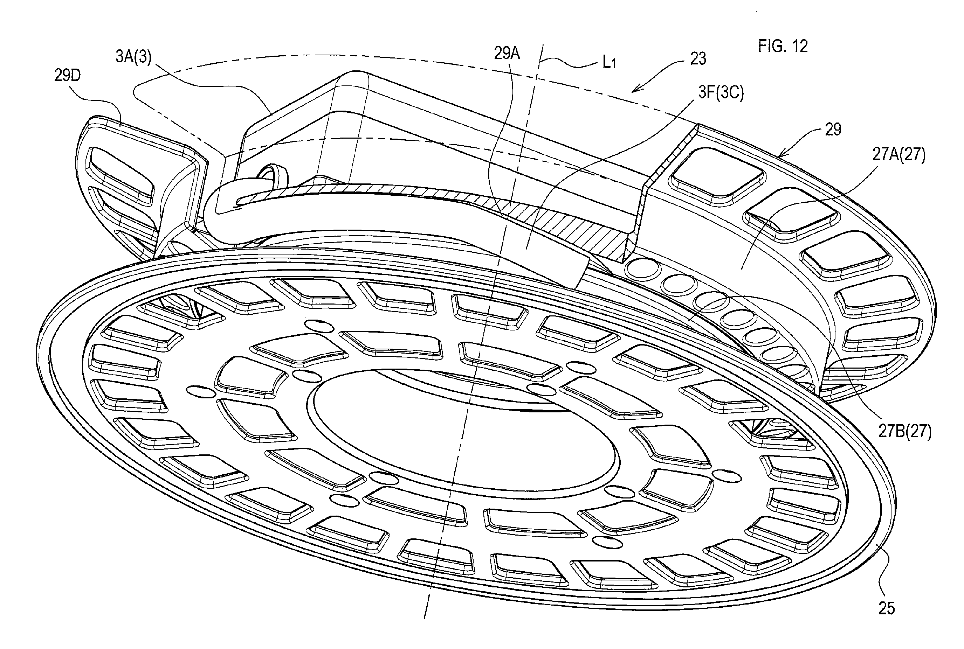

The present embodiment provides a charging cable housing device in which, as shown in Fig. 11 and Fig. 12, the charging control box 3A is stored in the inner side of the winding rim 27.

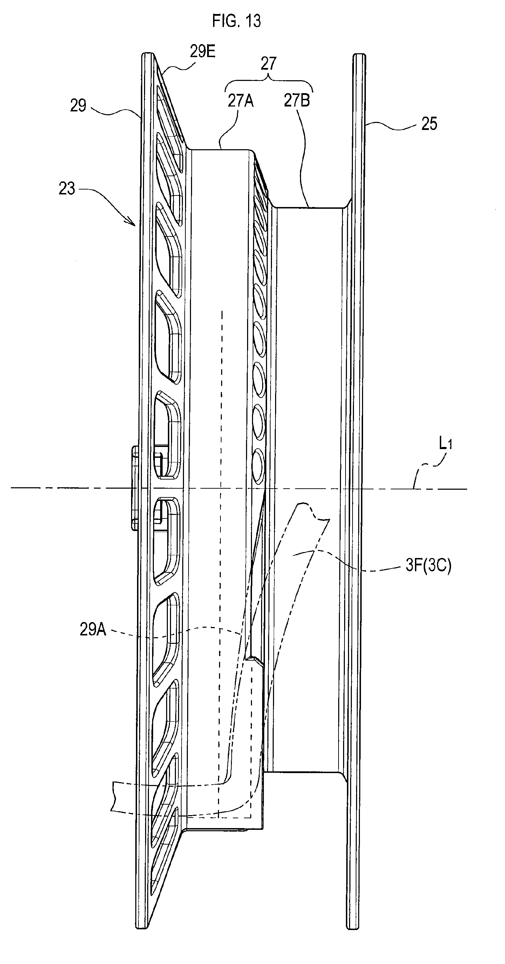

In the same manner as in the first embodiment, as shown in Fig. 11 to Fig. 13, the guide groove 29A in the present embodiment extends in a spiral manner, penetrates the flange portion 29 from the outer side of the winding rim 27, and reaches the inner side of the winding rim 27 so as to communicate with the small diameter portion 27B.

Therefore, the same effect as in the charging cable housing device 1 according to the first embodiment can be achieved in the present embodiment.

### (Other Embodiments)

Although the present invention is applied to charging cable housing devices in the above described embodiments, the present invention is not limited to these embodiments, but can be also applied to, for example, a cable housing device without the charging control box 3A.

Moreover, in the above described embodiments, the winding rim 27 is provided with the large diameter portion 27A and the small diameter portion 27B. However, the present invention is not limited to this configuration. The winding rim 27 may alternatively have a uniform diameter in the axial direction L1.

Moreover, in the above described embodiments, the guide groove 29A penetrates the flange portion 29 from the outer side of the winding rim 27 and extends to the inner side of the winding rim 27. The present invention is not limited to this configuration. The guide groove 29A may be formed, for example, so as to penetrate the winding rim 27 in the radial direction.

In a case wherein the guide groove 29A is formed so as to penetrate the winding rim 27 in the radial direction, the start end portion 29B and the finish end portion 29C of the guide groove 29A do not have to be misaligned in a direction parallel to the axial direction L1.

Furthermore, in the above described embodiments, the flange portion 29 is provided with the inclined surface 29E. The present invention is not limited to this configuration, but may alternatively employ a structure without the inclined surface 29E.

Moreover, in the above described embodiments, the groove width W of the guide groove 29A is uniformly formed from the start end portion 29B to the finish end portion 29C. However, the present invention is not limited to this configuration. At least one region of the groove width W from the start end portion 29B and the finish end portion 29C simply needs to be smaller than the diameter of the wound side cable 3C.

The present invention can be carried out in various ways within the scope of the present invention disclosed in the claims, and therefore, is not limited to the above described embodiments.

## Claims

1. A cable housing device comprising:
a rotating drum having a winding portion around which a cable is wound; and
a guide groove having a groove into which a start portion of the cable is inserted and extending along a circumferential direction of the winding portion, a width of at least one portion of the groove being smaller than an external diameter of the cable.

2. The cable housing device according to claim 1, wherein the guide groove extends along the circumference direction such that one end side and another end side thereof, disposed in an extending direction, are misaligned in a direction parallel to an axial direction of the rotating drum.

3. The cable housing device according to claim 1 or 2,
wherein the winding portion comprises a large diameter portion and a small diameter portion, the small diameter portion having a diameter smaller than a diameter of the large diameter portion, and the large diameter portion and the small diameter portion being disposed parallel to each other in the axial direction, and
wherein the guide groove communicates with the small diameter portion.

4. The cable housing device according to any one of claims 1 to 3,
wherein a flange portion, projecting outwardly in a radial direction, is provided on one side of the rotating drum in the axial direction, and
wherein the guide groove penetrates the flange portion from an outer side of the winding portion, and extends to an inner side of the winding portion.

5. The cable housing device according to claim 4, wherein the flange portion is configured to be an inclined surface, the inclined surface being inclined such that a surface of the flange portion, located on a side of the winding portion, is gradually separated away from another side in the axial direction toward an outer side in the radial direction.
